(19) **Europäisches Patentamt**
**European Patent Office**
**Office européen des brevets**

(11) **EP 2 745 466 B1**

(12) **EUROPEAN PATENT SPECIFICATION**

(45) Date of publication and mention
of the grant of the patent:
**29.11.2023 Bulletin 2023/48**

(21) Application number: **11808209.8**

(22) Date of filing: **22.12.2011**

(51) International Patent Classification (IPC):
**H04L 65/80** (2022.01)    **H04L 43/0829** (2022.01)
**H04L 43/55** (2022.01)

(52) Cooperative Patent Classification (CPC):
**H04L 43/0829; H04L 43/55; H04L 65/80**

(86) International application number:
**PCT/EP2011/073853**

(87) International publication number:
**WO 2013/091715 (27.06.2013 Gazette 2013/26)**

(54) **APPARATUS AND METHOD FOR MONITORING PERFORMANCE IN A COMMUNICATIONS NETWORK**

VORRICHTUNG UND VERFAHREN ZUR LEISTUNGSÜBERWACHUNG IN EINEM KOMMUNIKATIONSNETZ

DISPOSITIF ET PROCÉDÉ DE SURVEILLANCE DE PERFORMANCE DANS UN RÉSEAU DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.06.2014 Bulletin 2014/26**

(73) Proprietor: **Telefonaktiebolaget LM Ericsson (publ)**
**164 83 Stockholm (SE)**

(72) Inventors:
- **HANDURUKANDE, Sidath**
 **Athlone (IE)**
- **FEDOR, Szymon**
 **Athlone (IE)**

(74) Representative: **Ericsson**
**Patent Development**
**Torshamnsgatan 21-23**
**164 80 Stockholm (SE)**

(56) References cited:
**WO-A1-2008/121062    US-A1- 2008 298 448**

- **SIDATH HANDURUKANDE ET AL: "Magneto approach to QoS monitoring", INTEGRATED NETWORK MANAGEMENT (IM), 2011 IFIP/IEEE INTERNATIONAL SYMPOSIUM ON, IEEE, 23 May 2011 (2011-05-23), pages 209-216, XP032035481, DOI: 10.1109/INM.2011.5990693 ISBN: 978-1-4244-9219-0**
- **JING ZHANG ET AL: "A 2-Tier Clustering Algorithm with Map-Reduce", CHINAGRID CONFERENCE (CHINAGRID), 2010 FIFTH ANNUAL, IEEE, PISCATAWAY, NJ, USA, 16 July 2010 (2010-07-16), pages 160-166, XP031746654, ISBN: 978-1-4244-7543-8**
- **ERIC HSUEH-CHAN LU ET AL: "Mining Cluster-Based Temporal Mobile Sequential Patterns in Location-Based Service Environments", IEEE TRANSACTIONS ON KNOWLEDGE AND DATA ENGINEERING, IEEE SERVICE CENTER, LOS ALAMITOS, CA, US, vol. 23, no. 6, 1 June 2011 (2011-06-01), pages 914-927, XP011354636, ISSN: 1041-4347, DOI: 10.1109/TKDE.2010.155**
- **FENZA G ET AL: "A hybrid context aware system for tourist guidance based on collaborative filtering", FUZZY SYSTEMS (FUZZ), 2011 IEEE INTERNATIONAL CONFERENCE ON, IEEE, 27 June 2011 (2011-06-27), pages 131-138, XP031933543, DOI: 10.1109/FUZZY.2011.6007604 ISBN: 978-1-4244-7315-1**

- **Thomas Boothe ET AL: "Service quality - managing the user experience", Ericsson Review 2 / 2011, 21 December 2011 (2011-12-21), pages 16-21, XP55023907, Retrieved from the Internet: URL:http://www.ericsson.com/res/thecompany /docs/publications/ericsson_review/2011/Er icsson-Review-2011-2.pdf [retrieved on 2012-04-04]**
- **"Keeping the Customer Service Experience Promise", Ericsson White Paper, 1 January 2011 (2011-01-01), pages 1-9, XP55023913, Retrieved from the Internet: URL:http://www.ericsson.com/res/docs/white papers/wp_service_assurance.pdf [retrieved on 2012-04-04]**

**Description**

Technical Field

The present invention relates to an apparatus and method for monitoring performance in a communications network, for example service performance relating to media streaming (such as for example video streaming) in a communications network.

Background

There are various types of video streaming services delivered to users using telecommunication and internet service provider (ISP) networks. For example, these include video-on demand (VoD) whereby a user can browse and stream previously recorded videos, live streaming whereby a user can watch live video (for example related to an event such as a sporting event), and time-shifted TV whereby the user can watch recorded TV. Video streaming service impairment can occur due to various issues and problems within the network. From the perspective of both the user and the telecommunication network operator or internet service provider it is important to monitor the service quality delivered to the end user so that any issues can be observed and rectified.

A video streaming service can be provided using various techniques. The Internet Protocol Television (IPTV) service is realized either based on a IP multimedia subsystem (IMS), or non-IMS based system. IMS has been introduced by the 3GPP initiative as the architectural subsystem that is dedicated to control and provide multimedia services over packet based core networks within third generation mobile networks and next generation networks, such as Long Term Evolution (LTE). IPTV is therefore implemented on top of different technologies which make use of a combination of various protocols. In addition, in the digital TV domain, Hybrid IPTV is emerging and it is known to have set-top-boxes (STBs) which support both traditional IPTV and WebTV using access to the internet.

The operators who provide communication services (for example "bit-pipe providers" to YouTube content) and high-level end user services (such as IPTV from its own video head-end) are interested in monitoring the Quality of Service (QoS) that the end user is receiving. Based on this monitoring, the operator can gauge the quality of the service delivery.

However, in the context described above for monitoring video streaming service performance, it is a daunting task for operators to devise different monitoring solutions to cover the entire spectrum of video streaming services.

The solutions available today are mostly monolithic point solutions targeting a particular service, and they are generally based on network probes that provide information about the traffic at different points in the network.

Known solutions consist of estimating the service quality, which is expressed using a so-called measure Quality of System Service (QoSS). The QoSS is derived from the measurement of network level key performance indicators (KPIs). A KPI is a performance measure for a particular characteristic and is a measureable objective. KPIs are expressed as numeric values, and generally these values are expressed as ranges, upper limits, lower limits or percentages.

The KPIs can be divided into so-called Resource Service KPIs (R-KPIs) and System Service KPIs (S-KPIs).

R-KPIs are network level KPIs for a given network resource, such as a link, bearer, node, and so on. These include performance measurements relating to the network resources, for example packet loss, jitter, packet delay, amount of packet reorder, etc. These KPIs are objective measurements.

S-KPIs are a set of specific KPIs that represent characteristics for a specific system service, for example a service such as IPTV, and are based on events such as the frequency of choppiness, the frequency of frame freezes, access time, and so on. Further details of S-KPIs can be found in WO2008/121062A1.

S-KPIs are higher level key performance indicators that are directly characterizing the end user service

Each S-KPI measures only one aspect of service performance. The overall service performance can be expressed using the so-called Quality of System Service (QoSS) metric which combines several (for example up to ten) S-KPIs of the same service.

Some of the disadvantages found with existing QoSS monitoring solutions are discussed below.

Some solutions are based entirely on terminal reports provided by end user devices. This approach is based on the assumption that an operator is able to receive terminal reports from the end user devices. In general this is not a valid and reliable assumption since most terminal equipment devices are not capable of collecting or sending terminal reports.

Another known solution is human centric, involving manual mapping of service quality in terms of QoSS to R-KPI values. Here humans map in design time different R-KPIs values to expected service quality perceived by the user. In this approach, the manual mapping of R-KPIs to QoSS is very time consuming, error prone and rigid. It is rigid in the sense it cannot adapt to changes in the system (i.e. network topology and technology changes) and new devices. As a result such methods are not viable in a dynamic network.

A further disadvantage of the solutions described above is that a relationship between S-KPIs and R-KPIs must be established for each different type of application, or each different media stream being monitored. As such, existing solutions have the disadvantage of requiring different monitoring solutions for different video streaming services, for example, and often rely on receiving terminal reports from end user devices.

There are known documents related to monitoring quality of service, namely Sidath HANDURUKANDE et al, "Magneto approach to QoS monitoring", INTEGRATED

NETWORK MANAGEMENT (IM), 2011 IFIP/IEEE INTERNATIONAL SYMPOSIUM ON,

IEEE, (20110523), pages 209 - 216 and US2008298448. However, devices and operations as in the invention now to be described are neither disclosed nor suggested in these documents.

Summary

It is an aim of the present invention to provide a method and apparatus which obviate or reduce at least one or more of the disadvantages mentioned above.

According to a first aspect of the present invention there is provided a method for monitoring the performance of a media streaming service being used to deliver media streams to user equipment devices. The method comprises the steps according to independent claim 1.

An advantage of the embodiment described above is that a functional dependency model between S-KPIs and a plurality of R-KPIs does not need to be established for each and every type of different media streaming service. Instead, a functional dependency model established for a media stream having a particular encoding characteristic is used for monitoring a second media stream having the same encoding characteristic as the first media stream.

According to another aspect of the present invention, there is provided a monitoring device, according to independent claim 10, for use in a communications network for monitoring the performance of a media streaming service that is used to deliver media streams to user equipment devices via the communications network.

According to another aspect of the present invention, there is provided a communications network according to claim 12.

Preferred embodiments of the invention are set out in the dependent claims.

Brief description of the drawings

For a better understanding of the present invention, and to show more clearly how it may be carried into effect, reference will now be made, by way of example only, to the following drawings in which:

Figure 1 shows an example of a typical communication network;

Figure 2 shows a flowchart illustrating the steps performed by an embodiment of the present invention;

Figure 3 shows the steps performed by a method that can be used with an embodiment of the present invention;

Figure 4 shows a table for storing time-correlated S-KPIs and R-KPIs for an individual service user in one embodiment of the present invention;

Figure 5 shows a flowchart illustrating the steps performed by another embodiment of the present invention;

Figure 6 illustrates an example of a linear mathematical relationship between an R-KPI and an S-KPI for media streams having different encoding characteristics;

Figure 7 illustrates the impact of an encoding characteristic such as encoding bit rate on the slope parameter, the slope parameter being the slope of the S-KPI versus R-KIPs curve;

Figure 8 shows a flowchart illustrating the steps performed by a further embodiment of the present invention;

Figure 9 shows a monitoring device according to an embodiment of the present invention; and

Figure 10 illustrates how embodiments of the present invention may be used with an application having an adaptive CODEC.

Detailed description

The embodiments of the invention will be described below in relation to monitoring the performance of video streaming. However, it is noted that the invention is intended to embrace the performance monitoring of any form of media streaming service including, but not limited to, applications such as Voice over Internet Protocol (VoIP), Internet Protocol Television (IPTV), Video on Demand (VoD), Multimedia Telephony Service (MMTel).

The embodiments of the invention provide a generic solution to performance monitoring, which can be used with many different types of media streaming services and their flavours, and with different end user devices (i.e. user equipment devices). It is noted that the embodiments can be deployed in any node of a communication network, including network edge devices such as home gateways. The ability to position the embodiments in such nodes, close to the end user, enables a better understanding of the various problems experienced by the end user to be established, and thus allow the operator to have a better understanding of the real quality of the services from the user side.

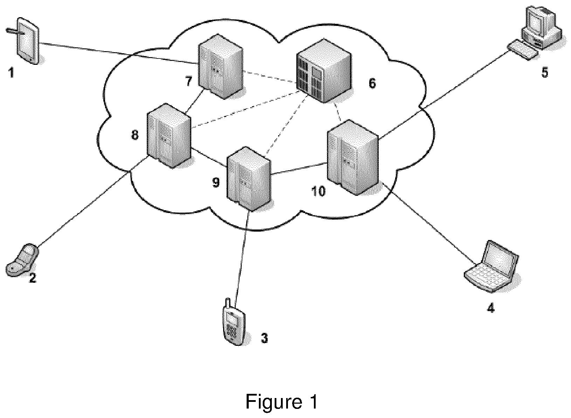

Figure 1 illustrates a communications network having various network nodes that route signals between various user equipment (UE) devices (for example: laptop 4; phone 2, 3; PC 5; PDA1, etc). The network elements 6 to 10 communicate over communication links which include mobile links, satellite links, microwave links, fibre optic links, copper wire links, etc. One of the nodes comprises a monitoring device 6 that monitors the performance of the various communication links.

As will be described in greater detail later in this application, embodiments of the present invention use System Service Key Performance Indicators (S-KPIs) and related Resource Service Key Performance Indicators (R-KPIs) to monitor the performance of a media streaming service to end user devices, such as the user equipment devices 2, 3, 4, 5. Functional dependency models between S-KPIs and R-KPIs are often used to model system behaviour, for example in an application where end user devices are not able to provide terminal reports that provide actual S-KPI data.

The embodiments of the present invention are concerned with optimizing the building of such functional dependency models, when monitoring the performance of media streaming services being used to deliver media streams to user equipment devices.

It is noted that the embodiments of the invention are applicable for different classes of CODECs, including:

1) non-adaptive class of media CODECs (including MPEG2), whereby media encoding parameters are not adapted and changed during the transmission of the media (for example to adapt to network conditions and other entities such as a receiving client, or depending on the nature of the media/content).

2) adaptive class of media CODECs, whereby media encoding parameters (such as bit-rate, frame-rate) are adapted and changed during the transmission of the media (for example to adapt to network conditions such as available bandwidth, or other entities such as a receiving client, or in dependence on the nature of the media/content).

The embodiments of the invention will first be described in relation to an application where non-adaptive CODECs are used, whereby media encoding parameters are not changed during transmission. However, later in the application it will also be described how the various embodiments can be used with applications where adaptive CODECs are used.

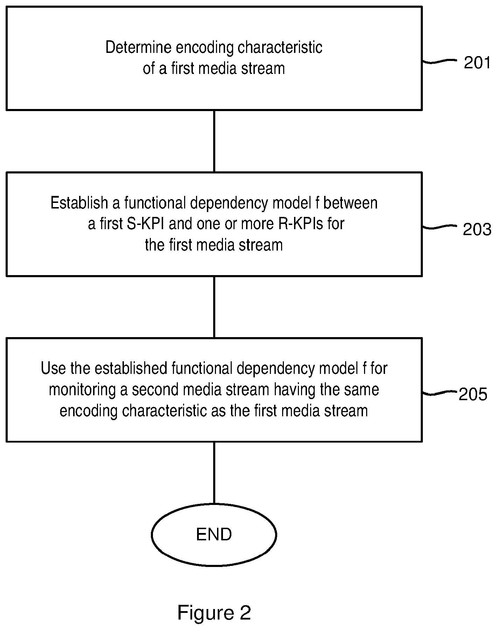

Referring to Figure 2, according to an embodiment of the present invention, a method for monitoring the performance of a media streaming service being used to deliver media streams to user equipment devices comprises the step of determining an encoding characteristic of a first media stream being monitored, step 201.

In step 203, a functional dependency model (f) is established between a first System Service Key Performance Indicator, S-KPI, and one or more Resource Service Key Performance Indicators, R-KPIs, for the first media stream. The one or more R-KPIs relate to resources (for example bearers, links, nodes etc) in the communication network used to deliver the first media stream to user equipment devices.

The established functional dependency model (f) is used for monitoring the performance of a second media stream having the same encoding characteristic as the first media stream, step 205.

As such, rather than having to establish a functional dependency model between each S-KPI and a plurality of R-KPIs for every type of different media stream that can be delivered to user equipment devices, the embodiments of the invention have the advantage of optimizing the functional dependency model, by reusing the model of a media stream having a particular encoding characteristic when monitoring another media stream having the same encoding characteristic.

According to one embodiment, the encoding characteristics of different media streams are categorised into a plurality of distinct levels L, such that a functional dependency model established for a media stream having a particular encoding level $L_n$ is used when monitoring another media stream having the same encoding level $L_n$.

The functional dependency of an S-KPI from several R-KPIs is therefore determined by the encoding parameters of a media stream, and not the video content. The possible parameters of interest include, but are not limited to, the type of codec used to encode the media stream (e.g. type of video codec), the average bit rate of the media stream, the maximum bit rate of the media stream, an indication whether the media stream is a variable or constant bit rate media stream, a frame rate of the media stream, and so on. Therefore, the proposed embodiments can use the same functional dependency model to monitor the quality of two different videos encoded with the same characteristics or parameters.

The encoding characteristic of a media stream can be learnt by a monitoring device or node in several ways. For example, the encoding characteristics can be determined from information received from a source of the media stream, for example from information received from a video streaming head-end. The encoding characteristics can also be obtained from a header portion of the media stream, for example a video header of a streamed video file. A probing mechanism may be provided in the network which extracts and forwards information about the encoding characteristics from a streamed file to a monitoring device or node. Any one of these techniques may be used in isolation or in combination to obtain details of the encoding characteristics.

As mentioned above, the embodiments of the invention can be used with applications where functional dependency models between S-KPIs and R-KPIs are used to monitor performance of media services provided to end users.

An example of such an application is described in an earlier application by the present Applicant, PCT/EP2010/067715. In PCT/EP2010/067715 a generic solution for monitoring any type of service provided to an end user is described. The solution consists of estimating the service quality, expressed using a so-called measure Quality of System Service (QoSS), from the measurement of network level R-KPIs (for example packet loss, jitter etc.). To monitor the quality of a service, the system collects the plurality of R-KPIs and applies a pre-built functional dependency model (which is a form of "mapping" between S-KPIs and R-KPIs which can be in the form of a mathematical formula or in a different form) to calculate the value of the QoSS. The QoSS can be a combination of several S-KPIs (for example the frequency of "choppiness" events or the frequency of "frame freeze" events, etc.).

The application described in PCT/EP2010/067715 describes a method for automatically building the model that is applied to measure service performance from R-KPIs.

The method involves collecting measurements of R-KPIs from bearers, links, nodes etc. It also collects parameters of S-KPIs from a representative sample of service users. It then automatically calculates functional dependency of each S-KPI of several R-KPIs using Data Mining techniques.

The system divides into clusters a representative sample of service users (which can send terminal reports) on the basis of a functional relationship between resource service performance (measured by R-KPIs) and service performance parameters (S-KPIs). Then for every cluster it calculates a generic relationship between R-KPIs and S-KPIs that is representative for the cluster members. It allows an operator to assign the terminals which cannot send terminal reports to a "closest" cluster and predict S-KPIs values for this terminal using previously obtained function and R-KPIs measurements. As a result the operator can assess performance of services run on terminals which cannot or do not send service performance parameters.

The method therefore assumes that service users can be distinguished into two types of users: users with devices that can send terminal reports and users having devices that cannot send terminal reports. S-KPIs collected in the terminal reports are used to build a model representing the relationship between R-KPIs and S-KPIs. This model is then applied to estimate S-KPIs (and then QoSS) for the services delivered to the users whose devices cannot send terminal reports.

There are therefore two main phases in the above: a preparation phase and monitoring phase. During the preparation phase, the system builds a functional dependency model between each S-KPI and several R-KPIs for the devices that are able to send terminal reports. Moreover, the system will form clusters of the devices which obtain similar functional expression. At the end of the phase, users of the remaining devices (i.e. not able to send terminal reports) will be assigned to the "closest" cluster. The "closest" cluster can be determined on the basis of several parameters (e.g. geographical proximity, network topology proximity, end user device performance, etc.). In the monitoring phase, the system monitors the quality of video services consumed by the users. It collects R-KPI parameters and applies the functional dependency built in the preparation phase to estimate S-KPI values.

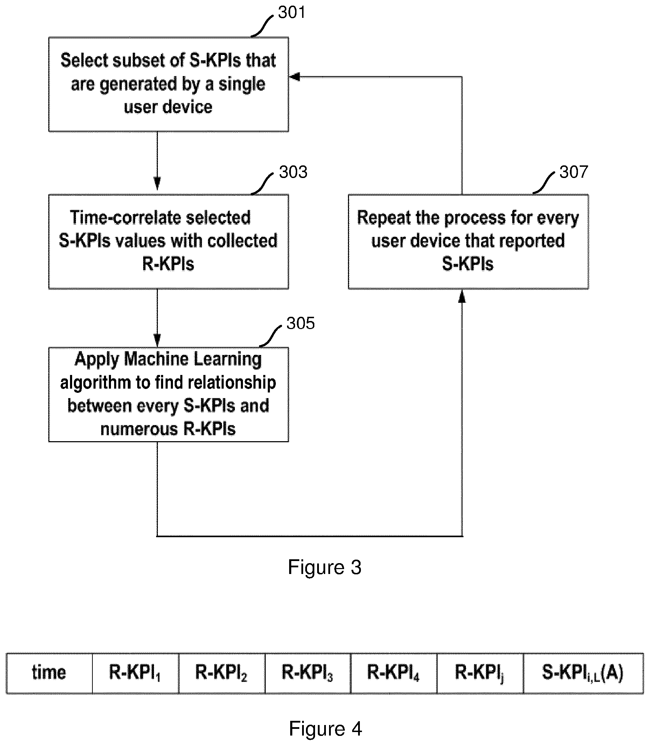

Referring to Figure 3, further details will now be provided in connection with how a functional dependency model is built between each S-KPI and one or more R-KPIs. It is noted that other methods of building a functional dependency model are intended to be encompassed by embodiments of the invention. The monitored video streaming services use network resources and therefore the performance of network resources (measured by R-KPIs) is reverberated in the values of S-KPIs. The values of R-KPIs and S-KPIs are cross-correlated and the monitoring server uses automatic methods (based on machine learning and data mining algorithms) to establish the cross-correlation, and Figure 3 illustrates an example of a method to calculate this function.

The method shown in Figure 3 is performed for every user device that reports S-KPIs. First, a subset of S-KPIs that are generated by a single user device is selected, step 301. These parameters will correspond to numerous video streaming services run on the corresponding user device.

Next, the values of S-KPIs are time-correlated with collected R-KPIs, for each service user independently, step 303. Therefore, they can be stored in a table as shown in Figure 4. The time parameter corresponds to an approximate timestamp of collecting R-KPIs and S-KPI. There are one or more measured R-KPI values, $R\text{-}KPI_1$ to $R\text{-}KPI_J$, which are network related parameters.

It is noted that, for ease of readability, the following description relates to the estimation of S-KPI when one specific encoding parameter is involved (in other words, one is being changed and others are fixed); more specifically the embodiment is described using an example where the bit rate is being changed. However, it is noted that the invention is intended to cover more general embodiments, including embodiments where a number of encoding parameters are being changed (for example, bit rate, frame rate etc.).

In the table shown in Figure 4, the value $S\text{-}KPI_{i,L}(A)$ represents a specific aspect "i" of performance (for example choppiness) of a video streaming service with an encoding characteristic having a specific level L (for example a particular bit rate) and used by a single user A.

In one embodiment there are several S-KPIs (for example choppiness, frame freeze etc.) corresponding to the same video streaming service and each of them is represented with an unique index "i" for the same user A. Also the video encoding characteristic can take a limited number of levels, as discussed above, such that each level is represented by a unique value L.

Then for every S-KPI the mathematical function is automatically established using Machine Learning and Data Mining methods, step 305. For a given CODEC and for a given type of encoding parameter L, the function will have a format:

$$S\text{-}KPI_{i,L}(A) = f(L, R\text{-}KPI_1, R\text{-}KPI_2, R\text{-}KPI_{3,\dots}) \quad \text{----------------------- (F1)}$$

The possible methods to obtain this formula are linear regression, polynomial fitting, support vector regression, etc. These methods are known in the art and will not be discussed here in detail. The used method for obtaining the formula extracts only the R-KPIs that have impact on the value of considered S-KPI, such that the S-KPI and used R-KPIs are correlated variables. As a result the system will automatically detect which are the network resources KPIs that influence a service because their R-KPI parameters will be present in the formula calculating the S-KPI of this service. The obtained function can be stored in a local database for further analysis.

It is noted that in the example above, for ease of understanding, the model is described for a simplified example having just one parameter that changes, using a model similar to equation (1), it is possible to estimate S-KPI of choppiness for a given video stream if the bit rate is known, if one of the encoding parameters L is known, and the packet loss is known.

However, in reality it will be appreciated that there are many different video streams having different encoding parameters (such as bit rate). It is a time and resource consuming task to build a model for each encoding parameter such as for each bit rate of different video formats.

The embodiments of the present invention provide an advantage over the technique described in PCT/EP2010/067715, in that it is not necessary to build a model for every type of media, such as every type of video. Instead, the effect of an encoding characteristic (or encoding characteristics) on the relationship between R-KPIs and S-KPIs is used to reduce the number of individual functional dependency models that need to be established in the overall functional dependency model. This is made possible by the fact that it is the encoding characteristics of a video stream, for example average bit rate or frame rate, that affects the relationship between R-KPIs and S-KPIs, and not the content of the video stream per se.

The embodiments of the invention therefore provide a new method for building the functional dependency model which can then be used to monitor video streaming service performance on the basis of R-KPI measurements. The proposed solution reduces the effort required to build the model because it does not have to be created for every video stream, but the same model can be used for two or more different video streams with the same encoding characteristics (such as bit rate, frame rate etc.). The effort required to build the functional dependency of each S-KPI of several R-KPIs is therefore reduced.

As the video characteristics parameters can take a relatively small number of possible values, the effort required to build functional dependency of each S-KPI of several R-KPIs is negligible in comparison to a scenario where for every video the corresponding dependency model is build.

Furthermore, according to another embodiment of the invention, the method can be optimised further for one or more S-KPIs (for example choppiness) where there is a particular mathematical relationship, such as a linear dependency, between the S-KPI and R-KPIs for media streams having different encoding characteristics. This linear dependency can be obtained from at least first and second videos with different encoding characteristics, for example, and then extrapolated for videos with other values of encoding characteristics. According to one embodiment, a set of videos are used to determine the functional dependency, such as a linear dependency.

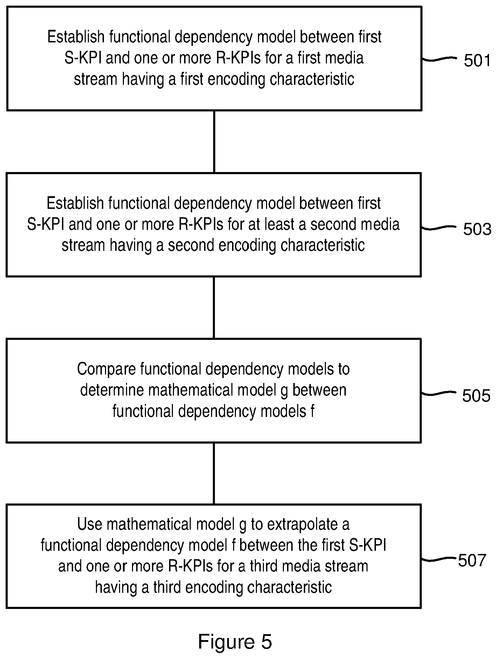

Further details of this optimisation technique are shown in Figure 5. In step 501 a functional dependency model (f) is established between a first S-KPI and one or more R-KPIs for a first media stream. In step 503 a functional dependency model (f) is established between the first S-KPI and one or more R-KPIs for at least a second media stream, the second media stream (or further media streams in a set of media streams) having a different encoding characteristic (for example different bit rate) to the first media stream.

The functional dependency models for the first media stream and the at least second media stream are compared, step 505, to determine a mathematical relationship (g) between the functional dependency models. For example, the function g is determined, which can be used to find the slope parameter of a given S-KPI versus R-KPIs curve as discussed below.

The mathematical relationship (g) is then used, step 507, to extrapolate a functional dependency model between the first S-KPI and one or more R-KPIs (such as the slope of S-KPI and one or more R-KPIs curve) for a third media stream, the third media stream having a different encoding characteristic to the first and at least second media streams.

According to such an embodiment, it is possible to establish a mathematical relationship (such as a linear relationship, for example) from the monitoring of only two videos (or a small set of videos) with different encoding characteristics, and extrapolate the mathematical relationship for videos with other encoding characteristics. Therefore, the effort to build the model between an S-KPI and R-KPIs is reduced even further.

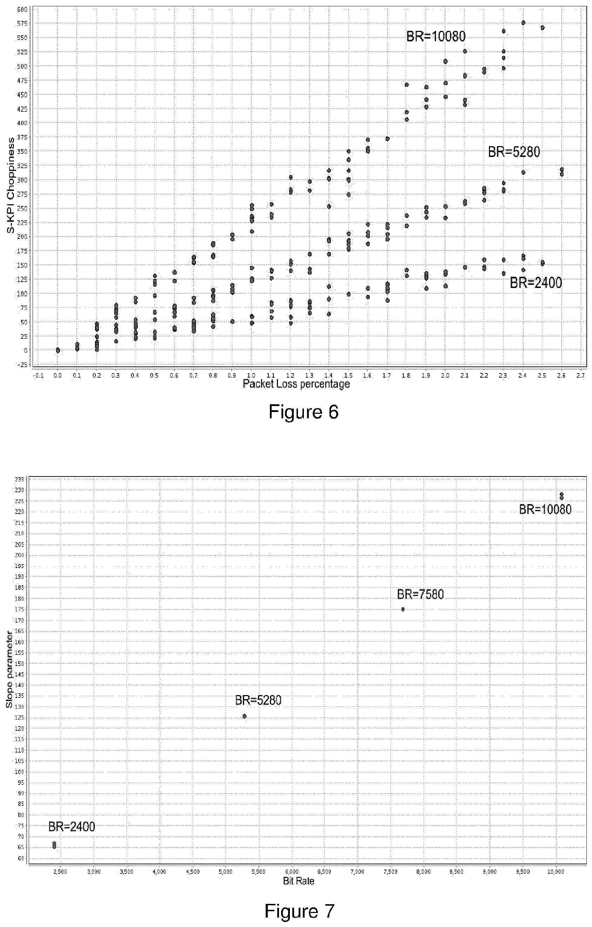

As an example illustrating such scenario, one of the S-KPI parameters expressing quality of a video stream is called choppiness and its value corresponds to the number of choppiness events detected by the end user client per time unit. The value of choppiness S-KPI depends mainly on the value of packet loss R-KPI of the end-to-end link between the head-end and video stream client. Experiments by the inventors have shown that there is a linear relationship (for example for a MPEG2 CODEC for a given bit rate) between the value of packet loss R-KPI and choppiness S-KPI, as shown in Figure 6, and this relationship can be obtained automatically using linear regression. The impact of bit rate on formula f is given by function g. In this example, for a MPEG2 CODEC, the slope parameter (gradient) m of the obtained linear model (i.e., slope parameter of S-KPI vs packet loss curve) depends linearly on the bit rate encoding parameter of the video stream, as illustrated in Figure 7.

In this example the expression of the g function is:

$$m = g\,(L_1)\ =\ 0.021 {*} L_1 + 15.445 \qquad \text{------------------- (F2)}$$

Therefore, for a certain class of CODEC, it is possible to establish the slope parameter and then the linear relationship between the value of packet loss R-KPI and choppiness S-KPI for any level of video encoding parameters (e.g., frame rate, bit rate etc.) in the following optimized way.

During a preparation phase, the system monitors S-KPIs and R-KPIs values corresponding to two or more streaming services characterized by different encoding parameters. From these measurements it is possible to establish a linear function, unique for each value of encoding parameter of the video, representing relationship between S-KPI and R-KPI. Each of these linear functions will pass through the origin of the coordinate system in a failure free case because when packet loss equals zero, the choppiness S-KPI also is zero. Moreover, the values of the slope coefficient m of these functions are linearly dependent on the encoding characteristics (i.e. bit rate) of the video to which they correspond. Therefore, it is possible to determine the linear function representing dependence of the slope coefficient m from the encoding parameter of the video if at least two values of such slope coefficients are established from the measurements of R-KPIs and S-KPIs. This linear function can be used in a monitoring phase to monitor S-KPI values on the basis of R-KPIs, as described in the next section.

In a simplified example, for a given CODEC such as MPEG2 (which belongs to the class of CODECs described above), when other encoding parameters (such as frame rate) are fixed, it is possible to determine a slope parameter m empirically using two corresponding video streams. Once the value of m is known, using extrapolation, a certain S-KPI such as choppiness can be found using models similar to the ones shown in (F1) and (F2) above.

Although the embodiments have been described using linear relationships (for example in Figures 6 and 7 and in equation (F2)), it is noted that the embodiments can be used for any mathematical relationship, including nonlinear relationships.

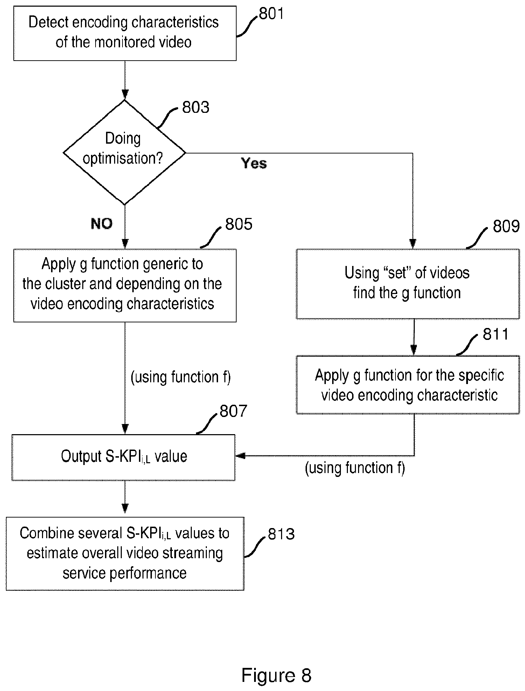

Another embodiment for monitoring the quality of a media streaming service is shown in Figure 8, illustrating how to estimate S-KPIs values from the R-KPI measurements. In a first step 801 the system detects encoding characteristics or parameters of the monitored video, for example as described above. In step 803 it is determined whether the system is performing an optimization method (to obtain the functional dependency model g). If it is determined in step 803 that the system is not performing the optimization method, it applies the function g (which was obtained earlier by performing the optimization) for the video encoding characteristics, step 805. This functional dependency model, corresponding to the encoding characteristic model determined in step 801, is then used as the functional dependency model g to output a S-KPI value, $\text{S-KPI}_{i,L}$, step 807.

If it is determined in step 803 that the system is performing the optimization method, it determines function g (using a set of videos, for example comprising two or more videos), step 809, and then applies function g for a specific video encoding characteristic to find m, the slope parameter of S-KPI versus R-KPIs, step 811. This function f is then used to estimate the value of S-KPI$_{i,L}$ parameters based on measured R-KPIs, step 807. In other words, once m is known function f can be used to calculate the S-KPI$_{i,L}$ value from the measured R-KPIs. Function g is used to find the coefficient m for the value of encoding parameters of the monitored video.

Therefore, from the above it can be seen that, if the optimization technique is being used, the embodiment first determines the function g, and uses the function g to find the m value. This then enables the S-KPI value to be determined. If the optimisation technique is not being used, the embodiment can assume it has already built the function g earlier, and then use this previously determined function g.

In order to assess overall performance of a video streaming service, several S-KPI$_{i,L}$ parameters are combined, step 813, as described earlier to obtain an overall QoSS measurement.

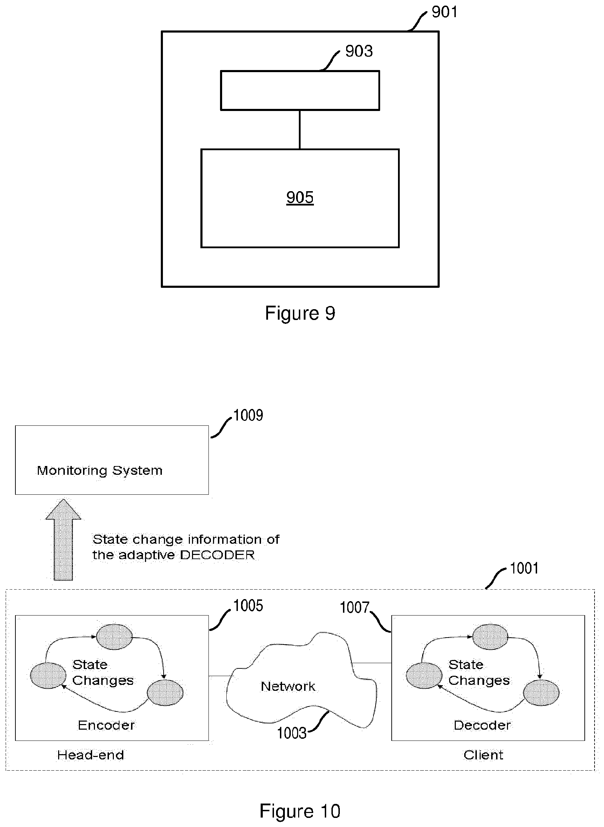

Figure 9 shows a monitoring device 901 according to an embodiment of the present invention. The monitoring device 901 may be used in a communications network for monitoring the performance of a media streaming service that is used to deliver media streams to user equipment devices via the communications network. The monitoring device comprises a detection module 903 adapted to determine an encoding characteristic of a first media stream being monitored. A processing module 905 is adapted to establish a functional dependency model between a first System Service Key Performance Indicator, S-KPI, and one or more Resource Service Key Performance Indicators, R-KPIs, for the first media stream. The processing module 905 is further adapted to use the established functional dependency model for monitoring a second media stream having the same encoding characteristic as the first media stream.

According to another embodiment, the processing module 905 is adapted to establish functional dependency models between a first System Service Key Performance Indicator, S-KPI, and one or more Resource Service Key Performance Indicators, R-KPIs, for a set of media streams that are used to build functional dependency models. The processing module 905 is further adapted to use the established functional dependency models for monitoring new media streams.

The embodiments above have described how S-KPI estimation can be carried out in the context of non-adaptive CODECs and protocols where media encoding parameters are not adapted and changed during the transmission of the media to adapt to network (and other entities such as receiving client) conditions or changed depending on the nature of the media/content.

However, the embodiments can be used to estimate S-KPIs in the context of adaptive CODECs and protocols where media encoding parameters are adapted and changed during the transmission of the media to adapt to network (and other entities such as receiving client) conditions or changed depending on the nature of the media/content.

Referring to Figure 10, the adaptive CODECs and protocols in an encoder (at a head-end side 1005) or decoder (at a client side 1007) can change their encoding parameters (such as bit rate, frame rate etc), for example, during a particular transmission in order to adapt to changes in the network 1003. These changes can be considered as state changes in the encoder and decoder.

The extensions and steps provided to handle such adaptive CODECs are as follows.

1) The mathematical models (functional dependency models) are built considering each state of the encoder/decoder 1005/1007 and associated encoding parameters of each state. In other words, the state of the encoder/decoder is effectively a further parameter of the mathematical models.

2) During an estimation phase, a monitoring system 1009 provided for monitoring the service of media streaming, for example, is informed about the state changes of the encoder 1005 and/or decoder 1007. This can be done by an IPTV head-end (encoder) for example, as depicted in Figure 10. Once this is known it is used as an input to the mathematical model (functional dependency model), and as a result S-KPIs can be estimated appropriately using the correct models.

The embodiments described above have the advantage of providing a semiautomatic method of determining what are the network resources having an impact on the performance of a video streaming service. The method is generic, independent of network architecture and can be applied to various types of network (mobile, fixed, satellite, etc).

Furthermore, a network operator does not have to predefine network resources KPIs that are used by end user services.

The embodiments of the invention enable the monitoring of service performance on end user devices that are not able to send reports with service performance parameters.

The embodiments of the invention also reduce traffic load in comparison to the service monitoring methods which are based on terminal reports.

The effort required to build a functional dependency model between each S-KPI and R-KPIs is reduced because the embodiments of the invention reuse a model for monitoring media streams, such as videos, with the same video encoding characteristics as the video used to build the model. Therefore the model is independent of the video content.

If required, the methods described above can also optimize the algorithm used to build the functional dependency model between an S-KPI (like for example choppiness) and several R-KPIs because this model is linear, and moreover the slope coefficient linearly depends on the encoding characteristics of the video. Therefore it is enough to estimate the linear dependency of the slope coefficient from the encoding characteristics on the basis of two or more videos (for example a set of videos) encoded with different characteristics and extrapolate this result for any video.

It is noted that the embodiments of the invention allow media streaming services (for example IPTV, VoD, VoIP) to be monitored for end user devices for the purpose of quality assurance in communications networks, where streaming protocols such as RTP are used to deliver content such as video content.

The inventors have demonstrated from experiments that functional dependency of an S-KPI value on several R-KPIs does not depend on the video content but on the encoding characteristics of a video. Therefore the model built in a preparation phase does not have to be built for every individual video, but instead a model already created can be reused to apply for monitoring of quality of a video which has the same encoding characteristics as the video used to create the model. Furthermore, the proposed embodiments describe a solution that facilitates S-KPI monitoring based on extrapolation where certain S-KPIs (such as choppiness) changes linearly against certain video characteristics (such as bit rate of the video) for a given condition of network performance (e.g., packet loss).

The embodiments of the invention described above learn about characteristics (like stream bit rate, stream frame rate, codec used) of the videos whose performance needs to be monitored and apply the functional dependency which was built on the basis of a video stream with the same encoding characteristics. In such a scenario a video stream quality monitoring system does not have to build a functional dependency for every individual video but only for different levels of video stream characteristic values.

In some embodiments a functional dependency model is built for different levels L of encoding parameters used to encode video streaming content. However, it is possible that the functional dependency model can be expressed as a function g having as an input attribute the L values of the encoding characteristics or parameters. Therefore, in certain cases it is possible to obtain a mathematical formula for function g from the several instances of function f with different values of encoding levels L. For this, linear regression, polynomial fitting, support vector regression, etc. can be used. Once function g is obtained, it can be used to find the function f for the remaining values of encoding levels L.

It should be noted that the above-mentioned embodiments illustrate rather than limit the invention, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

**Claims**

1. A method for monitoring the performance of a media streaming service being used to deliver media streams to user equipment devices over a communications network, wherein each of said media streams is encoded according to one a plurality of encoding levels, the method comprising the steps of:

   collecting, for a first of said media streams encoded according to a first encoding level of said plurality of encoding levels, values for one or more Resource Service Key Performance Indicators, R-KPIs, wherein the R-KPIs are network level KPIs relating to resources in the communication network;
   establishing (203), for each of one or more System Service Key Performance Indicators, S-KPIs, for the media streaming service being delivered to a particular user equipment device, a functional dependency model in respect of media streams encoded according to the first encoding level by

      time-correlating values of the S-KPI with values of the one or more R-KPIs collected for the first of said media streams, and
      finding a relationship between values of the S-KPI in respect of the first encoding level and values of the one or more R-KPIs using a machine learning algorithm; and

      monitoring performance of the media streaming service in respect of a second of said media streams, encoded at the first encoding level, by collecting values for the one or more R-KPIs for the second of said media streams and applying (205) the respective established functional dependency model to estimate a value for one of the one or more S-KPIs in respect of the second of said media streams.

2. The method as claimed in claim 1, wherein the establishing (203) of a functional dependency model for each of the one or more S-KPIs further comprises:

collecting values of the one or more R-KPIs for each of a plurality of said media streams, each encoded according to a different one of said plurality of encoding levels; and

for each different one of said plurality of encoding levels, establishing a respective functional dependency model for the S-KPI.

3. The method as claimed in claim 1 or claim 2, wherein the establishing (203) of a functional dependency model for each of the one or more S-KPIs further comprises:

establishing a functional dependency model for the S-KPI in respect of a second of said plurality of encoding levels, different to the first encoding level; and

determining a mathematical relationship between the functional dependency models established in respect of the first and the second encoding levels and using the determined mathematical relationship to extrapolate a functional dependency model for the S-KPI in respect of a third of said plurality of encoding levels, different to the first and second encoding levels,

and wherein the functional dependency model established for the S-KPI in respect of the third encoding level is used to monitor performance of the media streaming service in respect of a third of said media streams, encoded at the third encoding level.

4. The method as claimed in claim 3, wherein

determining the mathematical relationship comprises comparing the functional dependency models established for the S-KPI in respect of the first and second encoding levels, and

wherein establishing the functional dependency model for the S-KPI in respect of the third encoding level comprises applying the determined mathematical relationship to generate the functional dependency model in respect of the third encoding level by extrapolation of the functional dependency models established in respect of the first and second encoding levels.

5. The method as claimed in claim 3 or 4, wherein the mathematical relationship is a linear relationship, an exponential relationship, or a parabolic relationship.

6. The method as claimed in any one of the preceding claims, comprising determining the encoding level of a media stream using information received from a source of the media stream.

7. The method as claimed in any one of claims 1 to 5, comprising determining the encoding level of a media stream using information carried in a header portion of the media stream.

8. The method as claimed in any one of the preceding claims, wherein the encoding level is characterised for a media stream by any one or more of the following:

a bit rate of the media stream;
an average bit rate of the media stream;
a maximum bit rate of the media stream;
a frame rate of the media stream; and
an indication of the type of codec used to encode the media stream.

9. The method as claimed in any one of the preceding claims, further comprising the steps of:

collecting, from network resources, values of the one or more R-KPIs relating to said media streams;
collecting values of the one or more S-KPIs from a representative sample of reporting user equipment devices using the media streaming service;
determining a relationship between the collected values of the one or more R-KPIs and S-KPIs;
clustering the user equipment devices from the representative sample based on the determined relationship between the one or more R-KPIs and the one or more S-KPIs;
assigning non-reporting user equipment devices to the clusters;
collecting values of the one or more R-KPIs from network resources; and
estimating values for the one or more S-KPI based on the determined relationship and values for the one or more R-KPIs collected after the relationship is determined.

10. A monitoring device (901) for use in a communications network for monitoring the performance of a media streaming service that is used to deliver media streams to user equipment devices via the communications network, wherein each of said media streams is encoded according to one a plurality of encoding levels, the monitoring device being configured:

> to collect, for a first of said media streams encoded according to a first encoding level of said plurality of encoding levels, values for one or more Resource Service Key Performance Indicators, R-KPIs, wherein the R-KPIs are network level KPIs relating to resources in the communication network;
> to establish (203), for each of one or more System Service Key Performance Indicators, S-KPIs, for the media streaming service being delivered to a particular user equipment device, a functional dependency model in respect of media streams encoded according to the first encoding level by

>> time-correlating values of the S-KPI with values of the one or more R-KPIs collected for the first of said media streams, and
>> finding a relationship between values of the S-KPI in respect of the first encoding level and values of the one or more R-KPIs using a machine learning algorithm; and

> to monitor performance of the media streaming service in respect of a second of said media streams, encoded at the first encoding level, by collecting values for the one or more R-KPIs for the second of said media streams and applying (205) the respective established functional dependency model to estimate a value for one of the one or more S-KPIs in respect of the second of said media streams.

11. The monitoring device as claimed in claim 10, being configured to apply the method of any one of claims 2 to 9 to monitor the performance of the media streaming service.

12. A communications network comprising a media streaming service that is adapted to provide media streams to user equipment devices via the communications network, the communications network comprising a monitoring device according to claim 10 or claim 11.

**Patentansprüche**

1. Verfahren zur Überwachung der Leistung eines Media-Streaming-Dienstes, der zum Zustellen von Medienströmen an Benutzergerätevorrichtungen über ein Kommunikationsnetzwerk verwendet wird, wobei jeder der Medienströme gemäß einer von einer Mehrzahl von Codierungsstufen codiert ist, und das Verfahren die folgenden Schritte umfasst:

> Sammeln von Werten für eine oder mehrere Ressourcendienst-Leistungskennzahlen, R-KPIs, für einen ersten der Medienströme, der gemäß einer ersten Codierungsstufe der Mehrzahl von Codierungsstufen codiert ist, wobei die R-KPIs KPIs auf Netzwerkebene in Bezug auf Ressourcen im Kommunikationsnetzwerk sind;
> Erstellen (203) eines funktionalen Abhängigkeitsmodells in Bezug auf Medienströme, die gemäß der ersten Codierungsstufe codiert sind, für jede einer oder mehrerer Systemdienst-Leistungskennzahlen, S-KPIs, für den Media-Streaming-Dienst, der an eine spezifische Benutzergerätevorrichtung zugestellt wird, durch

>> zeitliches Korrelieren von Werten der S-KPI mit Werten der einen oder der mehreren R-KPIs, die für den ersten der Medienströme gesammelt wurden, und
>> Ermitteln einer Beziehung zwischen Werten der S-KPI in Bezug auf die erste Codierungsstufe und Werten der einen oder der mehreren R-KPIs unter Verwendung eines Algorithmus für maschinelles Lernen; und
>> Überwachen der Leistung des Media-Streaming-Dienstes in Bezug auf einen zweiten der Medienströme, der auf der ersten Codierungsstufe codiert ist, durch Sammeln von Werten für die eine oder die mehreren R-KPIs für den zweiten der Medienströme und Anwenden (205) des jeweiligen erstellten funktionalen Abhängigkeitsmodells, um einen Wert für eine der einen oder der mehreren S-KPIs in Bezug auf den zweiten der Medienströme zu schätzen.

2. Verfahren nach Anspruch 1, wobei das Erstellen (203) eines funktionalen Abhängigkeitsmodells für jede der einen oder der mehreren S-KPIs ferner umfasst:

> Sammeln von Werten der einen oder der mehreren R-KPIs für jeden einer Mehrzahl der Medienströme, die jeweils gemäß einer verschiedenen der Mehrzahl von Codierungsstufen codiert sind; und

Erstellen eines jeweiligen funktionalen Abhängigkeitsmodells für die S-KPI für jede verschiedene der Mehrzahl von Codierungsstufen.

3. Verfahren nach Anspruch 1 oder 2, wobei das Erstellen (203) eines funktionalen Abhängigkeitsmodells für jede der einen oder der mehreren S-KPIs ferner umfasst:

Erstellen eines funktionalen Abhängigkeitsmodells für die S-KPI in Bezug auf eine zweite der Mehrzahl von Codierungsstufen, die von der ersten Codierungsstufe verschieden ist; und

Bestimmen einer mathematischen Beziehung zwischen den funktionalen Abhängigkeitsmodellen, die in Bezug auf die erste und die zweite Codierungsstufe erstellt wurden, und Verwenden der bestimmten mathematischen Beziehung, um ein funktionales Abhängigkeitsmodell für die S-KPI in Bezug auf eine dritte der Mehrzahl von Codierungsstufen zu extrapolieren, die von der ersten und der zweiten Codierungsstufe verschieden ist, und wobei das funktionale Abhängigkeitsmodell, das für die S-KPI in Bezug auf die dritte Codierungsstufe erstellt wurde, verwendet wird, um die Leistung des Media-Streaming-Dienstes in Bezug auf einen dritten der Medienströme zu überwachen, der auf der dritten Codierungsstufe codiert ist.

4. Verfahren nach Anspruch 3, wobei

das Bestimmen der mathematischen Beziehung ein Vergleichen der für die S-KPI in Bezug auf die erste und die zweite Codierungsstufe erstellten funktionalen Abhängigkeitsmodelle umfasst, und wobei das Erstellen des funktionalen Abhängigkeitsmodells für die S-KPI in Bezug auf die dritte Codierungsstufe ein Anwenden der bestimmten mathematischen Beziehung zum Erzeugen des funktionalen Abhängigkeitsmodells in Bezug auf die dritte Codierungsstufe durch Extrapolationen der in Bezug auf die erste und die zweite Codierungsstufe erstellten funktionalen Abhängigkeitsmodelle umfasst.

5. Verfahren nach Anspruch 3 oder 4, wobei die mathematische Beziehung eine lineare Beziehung, eine exponentielle Beziehung oder eine parabolische Beziehung ist.

6. Verfahren nach einem der vorhergehenden Ansprüche, umfassend ein Bestimmen der Codierungsstufe eines Medienstroms unter Verwendung von Informationen, die von einer Quelle des Medienstroms empfangen werden.

7. Verfahren nach einem der Ansprüche 1 bis 5, umfassend ein Bestimmen der Codierungsstufe eines Medienstroms unter Verwendung von Informationen, die im Header-Abschnitt des Medienstroms übertragen werden.

8. Verfahren nach einem der vorhergehenden Ansprüche, wobei die Codierungsstufen für einen Medienstrom durch eines oder mehrere von Folgendem gekennzeichnet sind:

eine Bitrate des Medienstroms;
eine mittlere Bitrate des Medienstroms;
eine maximale Bitrate des Medienstroms;
eine Bildrate des Medienstroms; und
eine Anzeige des Codec-Typs, der zum Codieren des Medienstroms verwendet wird,

9. Verfahren nach einem der vorhergehenden Ansprüche, ferner umfassend die folgenden Schritte:

Sammeln von Werten der einen oder der mehreren R-KPIs bezüglich der Medienströme aus Netzwerkressourcen;
Sammeln von Werten der einen oder der mehreren S-KPIs aus einer repräsentativen Stichprobe von meldenden Benutzergerätevorrichtungen, die den Media-Streaming-Dienst verwenden;
Bestimmen einer Beziehung zwischen den gesammelten Werten der einen oder der mehreren R-KPIs und S-KPIs;
Clustern der Benutzergerätevorrichtungen aus der repräsentativen Stichprobe basierend auf den Beziehungen zwischen der einen oder den mehreren R-KPIs und der einen oder den mehreren S-KPIs;
Zuweisen nichtmeldender Benutzergerätevorrichtungen zu den Clustern;
Sammeln von Werten der einen oder der mehreren R-KPIs aus Netzwerkressourcen; und
Schätzen von Werten für die eine oder die mehreren S-KPIs basierend auf der bestimmten Beziehung und den Werten für die eine oder die mehreren nach dem Bestimmen der Beziehung gesammelten R-KPIs.

**EP 2 745 466 B1**

10. Überwachungsvorrichtung (901) zur Verwendung in einem Kommunikationsnetzwerk zum Überwachen der Leistung eines Media-Streaming-Dienstes, der zum Zustellen von Medienströmen an Benutzergerätevorrichtungen über das Kommunikationsnetzwerk verwendet wird, wobei jeder der Medienströme gemäß einer von einer Mehrzahl von Codierungsstufen codiert ist, und die Überwachungsvorrichtung konfiguriert ist zum:

Sammeln von Werten für eine oder mehrere Ressourcendienst-Leistungskennzahlen, R-KPIs, für einen ersten der Medienströme, der gemäß einer ersten Codierungsstufe der Mehrzahl von Codierungsstufen codiert ist, wobei die R-KPIs KPIs auf Netzwerkebene in Bezug auf Ressourcen im Kommunikationsnetzwerk sind; Erstellen (203) eines funktionalen Abhängigkeitsmodells in Bezug auf Medienströme, die gemäß der der ersten Codierungsstufe codiert sind, für jede einer oder mehrerer Systemdienst-Leistungskennzahlen, S-KPIs, für den Media-Streaming-Dienst, der an eine spezifische Benutzergerätevorrichtung zugestellt wird, durch

zeitliches Korrelieren von Werten der S-KPI mit Werten der einen oder der mehreren R-KPIs, die für den ersten der Medienströme gesammelt wurden, und Ermitteln einer Beziehung zwischen Werten der S-KPI in Bezug auf die erste Codierungsstufe und Werten der einen oder der mehreren R-KPIs unter Verwendung eines Algorithmus für maschinelles Lernen; und

Überwachen der Leistung des Media-Streaming-Dienstes in Bezug auf einen zweiten der Medienströme, der auf der ersten Codierungsstufe codiert ist, durch Sammeln von Werten für die eine oder die mehreren R-KPIs für den zweiten der Medienströme und Anwenden (205) des jeweiligen erstellten funktionalen Abhängigkeitsmodells, um einen Wert für eine der einen oder der mehreren S-KPIs in Bezug auf den zweiten der Medienströme zu schätzen.

11. Überwachungsvorrichtung nach Anspruch 10, die so konfiguriert ist, dass sie das Verfahren nach einem der Schritte 2 bis 9 zum Überwachen der Leistung des Media-Streaming-Dienstes anwendet.

12. Kommunikationsnetzwerk, umfassend einen Media-Streaming-Dienst, der zum Bereitstellen von Medienströmen für Benutzergerätevorrichtungen über das Kommunikationsnetzwerk ausgelegt ist, wobei das Kommunikationsnetzwerk eine Überwachungsvorrichtung nach Anspruch 10 oder 11 umfasst.

**Revendications**

1. Procédé de surveillance des performances d'un service de streaming multimédia étant utilisé pour délivrer des flux multimédias à des dispositifs d'équipement utilisateur sur un réseau de communication, dans lequel chacun desdits flux multimédias est codé selon l'un d'une pluralité de niveaux de codage, le procédé comprenant les étapes suivantes :

la collecte, pour un premier desdits flux multimédias codé selon un premier niveau de codage parmi ladite pluralité de niveaux de codage, de valeurs pour un ou plusieurs indicateurs de performances clés de services de ressources, R-KPI, dans lequel les R-KPI sont des KPI de niveau de réseau relatifs à des ressources dans le réseau de communication ; l'établissement (203), pour chacun d'un ou plusieurs indicateurs de performances clés de services de système, S-KPI, pour le service de streaming multimédia étant délivré à un dispositif d'équipement utilisateur particulier, d'un modèle de dépendance fonctionnelle en ce qui concerne des flux multimédias codés selon le premier niveau de codage par

la corrélation dans le temps de valeurs du S-KPI avec des valeurs des un ou plusieurs R-KPI collectés pour le premier desdits flux multimédias, et la découverte d'une relation entre des valeurs du S-KPI en ce qui concerne le premier niveau de codage et des valeurs des un ou plusieurs R-KPI en utilisant un algorithme d'apprentissage automatique ; et la surveillance de performances du service de streaming multimédia en ce qui concerne un deuxième desdits flux multimédias, codé au premier niveau de codage, par la collecte de valeurs pour les un ou plusieurs R-KPI pour le deuxième desdits flux multimédias et l'application (205) du modèle de dépendance fonctionnelle établi respectif pour estimer une valeur pour les un ou plusieurs S-KPI en ce qui concerne le deuxième desdits flux multimédias.

2. Procédé selon la revendication 1, dans lequel l'établissement (203) d'un modèle de dépendance fonctionnelle pour chacun des un ou plusieurs S-KPI comprend en outre :

la collecte de valeurs des un ou plusieurs R-KPI pour chacun d'une pluralités desdits flux multimédias, chacun étant codé selon l'un différent de ladite pluralité de niveaux de codage ; et

pour chacun différent de ladite pluralité de niveaux de codage, l'établissement d'un modèle de dépendance fonctionnelle respectif pour le S-KPI.

3. Procédé selon la revendication 1 ou 2, dans lequel l'établissement (203) d'un modèle de dépendance fonctionnelle pour chacun des un ou plusieurs S-KPI comprend en outre :

l'établissement d'un modèle de dépendance fonctionnelle pour le S-KPI en ce qui concerne un deuxième de ladite pluralité de niveaux de codage, différent du premier niveau de codage ; et

la détermination d'une relation mathématique entre les modèles de dépendance fonctionnelle établis en ce qui concerne les premier et deuxième niveaux de codage et l'utilisation de la relation mathématique déterminée pour extrapoler un modèle de dépendance fonctionnelle pour le S-KPI en ce qui concerne un troisième de ladite pluralité de niveaux de codage, différent des premier et deuxième niveaux de codage,

et dans lequel le modèle de dépendance fonctionnelle établi pour le S-KPI en ce qui concerne le troisième niveau de codage est utilisé pour surveiller des performances du service de streaming multimédia en ce qui concerne un troisième desdits flux multimédias, codé au troisième niveau de codage.

4. Procédé selon la revendication 3, dans lequel

la détermination de la relation mathématique comprend la comparaison des modèles de dépendance fonctionnelle établis pour le S-KPI en ce qui concerne les premier et deuxième niveaux de codage, et

dans lequel l'établissement du modèle de dépendance fonctionnelle pour le S-KPI en ce qui concerne le troisième niveau de codage comprend l'application de la relation mathématique déterminée pour générer le modèle de dépendance fonctionnelle en ce qui concerne le troisième niveau de codage par extrapolation des modèles de dépendance fonctionnelle établis en ce qui concerne les premier et deuxième niveaux de codage.

5. Procédé selon la revendication 3 ou 4, dans lequel la relation mathématique est une relation linéaire, une relation exponentielle, ou une relation parabolique.

6. Procédé selon l'une quelconque des revendications précédentes, comprenant la détermination du niveau de codage d'un flux multimédia en utilisant des informations reçues depuis une source du flux multimédia.

7. Procédé selon l'une quelconque des revendications 1 à 5, comprenant la détermination du niveau de codage d'un flux multimédia en utilisant des informations portées dans une partie d'en-tête du flux multimédia.

8. Procédé selon l'une quelconque des revendications précédentes, dans lequel le niveau de codage est caractérisé pour un flux multimédia par un ou plusieurs de ce qui suit :

un débit binaire du flux multimédia ;
un débit binaire moyen du flux multimédia ;
un débit binaire maximal du flux multimédia ;
un débit de trames du flux multimédia ; et
une indication du type de codec utilisé pour coder le flux multimédia.

9. Procédé selon l'une quelconque des revendications précédentes, comprenant en outre les étapes suivantes :

la collecte, à partir de ressources de réseau, de valeurs des un ou plusieurs R-KPI relatifs auxdits flux multimédias ;

la collecte de valeurs des un ou plusieurs S-KPI à partir d'un échantillon représentatif de dispositifs d'équipement utilisateur de rapport en utilisant le service de streaming multimédia ;

la détermination d'une relation entre les valeurs collectées des un ou plusieurs R-KPI et S-KPI ;

le regroupement des dispositifs d'équipement utilisateur à partir de l'échantillon représentatif sur la base de la relation déterminée entre les un ou plusieurs R-KPI et les un ou plusieurs S-KPI ;

l'attribution de dispositifs d'équipement utilisateur de non-rapport aux groupements ;

la collecte de valeurs des un ou plusieurs R-KPI à partir de ressources de réseau ; et

l'estimation de valeurs pour les un ou plusieurs S-KPI sur la base de la relation déterminée et de valeurs pour les un ou plusieurs R-KPI collectés après que la relation est déterminée.

10. Dispositif de surveillance (901) destiné à être utilisé dans un réseau de communication pour surveiller les performances d'un service de streaming multimédia qui est utilisé pour délivrer des flux multimédias à des dispositifs d'équipement utilisateur via le réseau de communication, dans lequel chacun desdits flux multimédias est codé selon l'un d'une pluralité de niveaux de codage, le dispositif de surveillance étant configuré pour :

collecter, pour un premier desdits flux multimédias codé selon un premier niveau de codage parmi ladite pluralité de niveaux de codage, des valeurs pour un ou plusieurs indicateurs de performances clés de services de ressources, R-KPI, dans lequel les R-KPI sont des KPI de niveau de réseau relatifs à des ressources dans le réseau de communication ;
établir (203), pour chacun d'un ou plusieurs indicateurs de performances clés de services de système, S-KPI, pour le service de streaming multimédia étant délivré à un dispositif d'équipement utilisateur particulier, un modèle de dépendance fonctionnelle en ce qui concerne des flux multimédias codés selon le premier niveau de codage par

la corrélation dans le temps de valeurs du S-KPI avec des valeurs des un ou plusieurs R-KPI collectés pour le premier desdits flux multimédias, et
la découverte d'une relation entre des valeurs du S-KPI en ce qui concerne le premier niveau de codage et des valeurs des un ou plusieurs R-KPI en utilisant un algorithme d'apprentissage automatique ; et

surveiller les performances du service de streaming multimédia en ce qui concerne un deuxième desdits flux multimédias, codé au premier niveau de codage, par la collecte de valeurs pour les un ou plusieurs R-KPI pour le deuxième desdits flux multimédias et l'application (205) du modèle de dépendance fonctionnelle établi respectif pour estimer une valeur pour les un ou plusieurs S-KPI en ce qui concerne le deuxième desdits flux multimédias.

11. Dispositif de surveillance selon la revendication 10, configuré pour appliquer le procédé selon l'une quelconque des revendications 2 à 9 pour surveiller les performances du service de streaming multimédia.

12. Réseau de communication comprenant un service de streaming multimédia qui est apte à fournir des flux multimédias à des dispositifs d'équipement utilisateur via le réseau de communication, le réseau de communication comprenant un dispositif de surveillance selon la revendication 10 ou 11.

Figure 1

Determine encoding characteristic
of a first media stream

— 201

Establish a functional dependency model f between
a first S-KPI and one or more R-KPIs for
the first media stream

— 203

Use the established functional dependency model f for
monitoring a second media stream having the same
encoding characteristic as the first media stream

—205

END

Figure 2

301

```
┌─────────────────────────┐
│ Select subset of S-KPIs that │
│ are generated by a single │
│      user device         │
└─────────────────────────┘
```

303

```
┌─────────────────────────┐
│   Time-correlate selected │
│ S-KPIs values with collected │
│         R-KPIs           │
└─────────────────────────┘
```

307

```
┌─────────────────────────┐
│ Repeat the process for every │
│   user device that reported │
│         S-KPIs           │
└─────────────────────────┘
```

305

```
┌─────────────────────────┐
│  Apply Machine Learning  │
│ algorithm to find relationship │
│ between every S-KPIs and  │
│     numerous R-KPIs       │
└─────────────────────────┘
```

Figure 3

| time | R-KPI$_1$ | R-KPI$_2$ | R-KPI$_3$ | R-KPI$_4$ | R-KPI$_j$ | S-KPI$_{i,L}$(A) |
|------|-----------|-----------|-----------|-----------|-----------|------------------|

Figure 4

Establish functional dependency model between first
S-KPI and one or more R-KPIs for a first media
stream having a first encoding characteristic — 501

Establish functional dependency model between first
S-KPI and one or more R-KPIs for at least a second media
stream having a second encoding characteristic — 503

Compare functional dependency models to
determine mathematical model g between
functional dependency models f — 505

Use mathematical model g to extrapolate a
functional dependency model f between the first S-KPI
and one or more R-KPIs for a third media stream
having a third encoding characteristic — 507

Figure 5

Figure 6

Figure 7

Detect encoding characteristics
of the monitored video — 801

Doing
optimisation? — 803

Yes

NO

Apply g function generic to
the cluster and depending on the
video encoding characteristics — 805

Using "set" of videos
find the g function — 809

Apply g function for the specific
video encoding characteristic — 811

(using function f)

Output S-KPI$_{i,L}$ value — 807

(using function f)

Combine several S-KPI$_{i,L}$ values to
estimate overall video streaming
service performance — 813

Figure 8

901

903

905

Figure 9

1009

Monitoring System

State change information of
the adaptive DECODER

1001

1005

1007

State
Changes

Encoder

Head-end

Network

1003

State
Changes

Decoder

Client

Figure 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008121062 A1
- US 2008298448 A

- EP 2010067715 W

**Non-patent literature cited in the description**

- Magneto approach to QoS monitoring. **SIDATH HANDURUKANDE et al.** INTEGRATED NETWORK MANAGEMENT (IM), 2011 IFIP/IEEE INTERNATIONAL SYMPOSIUM ON. IEEE, 23 May 2011, 209-216